# EUROPEAN PATENT APPLICATION

(11) **EP 4 529 221 A1**
(43) Date of publication of application: **26.03.2025**
(21) Application number: 24715703.5
(22) Date of filing: 03.04.2024
(51) Int. Cl.: H04R 1/28, H04M 1/03, H04M 1/02

(54) **ELECTRONIC DEVICE COMPRISING ACOUSTIC CONDUIT OF SPEAKER**

(30) Priority: 14.07.2023 KR 20230092087; 20.07.2023 KR 20230094946
(71) Applicant: Samsung Electronics Co., Ltd., Suwon-si, Gyeonggi-do 16677 (KR)
(72) Inventor: KIM, taeeon, Suwon-si, Gyeonggi-do 16677 (KR); KIM, kIWON, Suwon-si, Gyeonggi-do 16677 (KR); PARK, Youngbae, Suwon-si, Gyeonggi-do 16677 (KR); LEE, Byounghee, Suwon-si, Gyeonggi-do 16677 (KR); CHO, Joonrae, Suwon-si, Gyeonggi-do 16677 (KR); HEO, Seungyoon, Suwon-si, Gyeonggi-do 16677 (KR)
(74) Representative: HGF
(86) International application number: PCT/KR2024/004345
(87) International publication number: WO 2025/018507

(57) **Abstract**

An electronic device includes a display forming a first part of a front section of the electronic device, a first hole penetrating a second part of the front section in a first direction that the display faces, the second part of the front section surrounding the display and extending from a side section of the electronic device, a second hole penetrating the side section in a second direction perpendicular to the first direction, a casing and a speaker within the casing, a first conduit extending from the casing to the second hole such that a diaphragm of the speaker is connected to the second hole, and a second conduit extending from the first conduit to connect the diaphragm to the first hole. The second conduit includes a section inclined at an acute angle toward the first hole with respect to the second direction.

## Description

### [Technical Field]

The descriptions below relate to an electronic device including an acoustic conduit of a speaker.

### [Background Art]

An electronic device such as a smartphone may include a speaker for outputting sound. For example, the electronic device may include a loud speaker for outputting sound of media and an earpiece speaker outputting call sound so that the user may hear the voice of other person by putting the device to ear. Since each speakers have different usage situations and required acoustic characteristics (e.g., frequency band, volume), the electronic device may generally include both the earpiece speaker and the loud speaker.

The above-described information may be provided as a related art for the purpose of helping to understand the present disclosure. No claim or determination is raised as to whether any of the above-described information may be applied as a prior art related to the present disclosure.

### [Technical Solution]

An electronic device according to an embodiment may comprise a display forming a first part of a front section (or first face or front face) of the electronic device, and a first hole penetrating (or, in other words, in, formed in, emerging from, or having an external mouth at) a second part of the front section (e.g. in a first direction that the display faces). The second part of the front section may surround the display and/or may extend from a side section of the electronic device. The electronic device may comprise a second hole penetrating (or, in ither words, in, formed in, emerging from, or having an external mouth at) the (or a) side section (which may also be described as an edge section), for example in a second direction perpendicular to the first direction. The electronic device may comprise a casing and a speaker (e.g. within the casing), and a first conduit extending (e.g. from, in, or at least partially in the casing) to the second hole such that a diaphragm of the speaker is connected (e.g. acoustically) to the second hole. In other words, the first conduit is arranged to convey sound waves generated by the speaker (and in particular, by the diaphragm) to the second hole (e.g. such that those sound waves may emerge from, or exit, the second hole, generally in the second direction). The electronic device may comprise a second conduit extending from the first conduit to connect (e.g. acoustically) the diaphragm to the first hole. In other words, the second conduit is arranged to convey sound waves generated by the speaker to the first hole (e.g. such that those sound waves may emerge from, or exit, the first hole, generally in the first direction). The second conduit may include a section inclined at an acute angle toward the first hole with respect to the second direction. The second conduit may branch (or branch off) from the first conduit at an acute angle (e.g. with respect to the second direction). For example, the second conduit may comprise at least a section branching off from, or meeting, the first conduit at an acute angle with respect to the second direction, for example such that a sidewall of the branching off section meets a sidewall of the first conduit at an obtuse angle.

### [Description of the Drawings]

FIG. 1 is a block diagram illustrating an electronic device 101 in a network environment 100 according to various embodiments.
FIG. 2A illustrates an example of an unfolding state of an electronic device according to an embodiment.
FIG. 2B illustrates an example of a folding state of an electronic device according to an embodiment.
FIG. 2C is an exploded view of an electronic device according to an embodiment.
FIG. 3 is a perspective view of an electronic device according to an embodiment.
FIG. 4A indicates a housing of an electronic device according to an embodiment.
FIG. 4B indicates a housing of an electronic device according to an embodiment.
FIG. 5A is a cross-sectional view for describing an acoustic conduit through which sound of a speaker module is output, according to an embodiment.
FIG. 5B is a cross-sectional view taken along line A-A' in FIG. 5A.
FIG. 5C is a cross-sectional view taken along line B-B' in FIG. 5A.
FIG. 6 is a graph indicating a sound pressure level.
FIG. 7A is a diagram indicating an acoustic branching space of an electronic device, according to an embodiment.
FIG. 7B is a diagram indicating a direction in which sound is branched in an acoustic branching space of an electronic device, according to an embodiment.
FIG. 7C is a diagram indicating a direction in which sound is branched in an acoustic branching space of an electronic device, according to an embodiment.
FIG. 7D is a diagram for indicating an area radiated in a second direction in an acoustic branching space, according to an embodiment.
FIG. 7E is a diagram for indicating an area radiated in a first direction in an acoustic branching space, according to an embodiment.
FIG. 8 is a graph indicating a sound pressure level in each direction according to an area ratio of an acoustic branching space, according to an embodiment.
FIG. 9A illustrates various shapes of a plurality of second holes according to an embodiment.
FIG. 9B illustrates various shapes of a plurality of second holes according to an embodiment.
FIG. 9C illustrates various shapes of a plurality of second holes according to an embodiment.
FIG. 10 is a graph indicating sound pressure as an inner cross-sectional area of a plurality of second holes is reduced, according to an embodiment.
FIG. 11 is a diagram indicating an electronic device to which an acoustic member is applied, according to an embodiment.
FIG. 12 is a graph indicating sound pressure according to application of an acoustic member.

### [Mode for Invention]

Hereinafter, with reference to a drawing, an embodiment of the present disclosure will be described in detail so that a person with ordinary knowledge in the technical field to which the present disclosure belongs may easily implement it. However, the present disclosure may be implemented in a number of different forms and is not limited to the embodiment described herein. In relation to the description of the drawings, the same or similar reference numeral may be used for the same or similar component. In addition, in the drawing and related description, descriptions of a well-known function and configuration may be omitted for clarity and brevity.

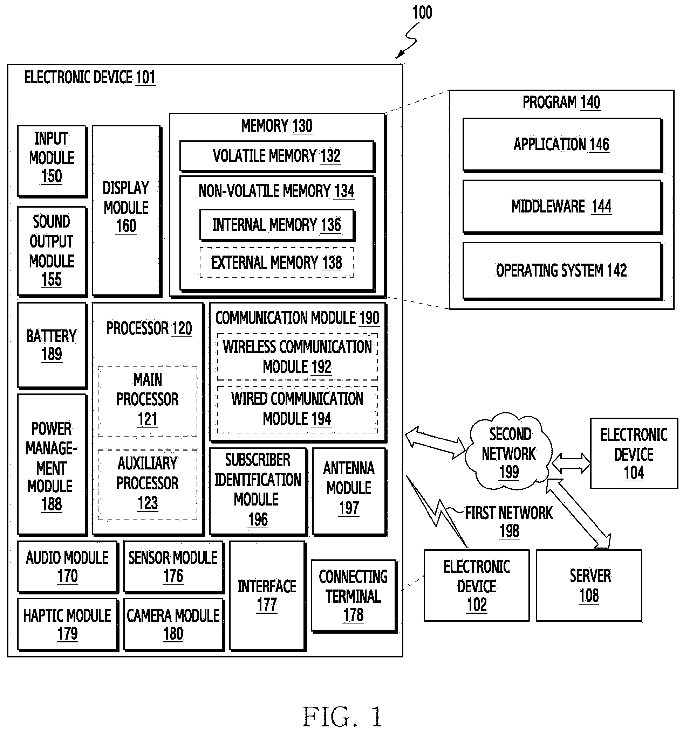

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. **In** some embodiments, at least one of the components (e.g., the connecting terminal 178) may be omitted from the electronic device 101, or one or more other components may be added in the electronic device 101. **In** some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

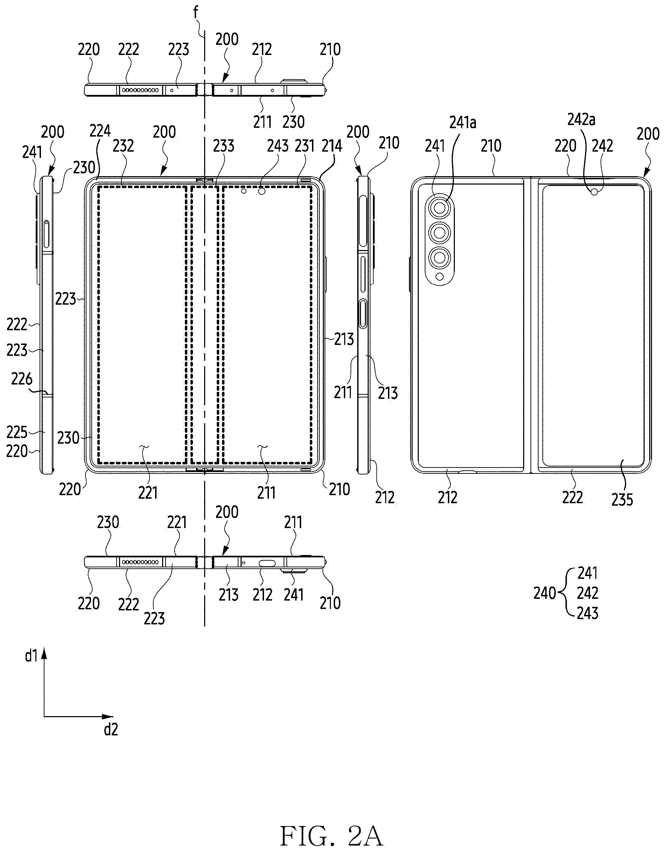

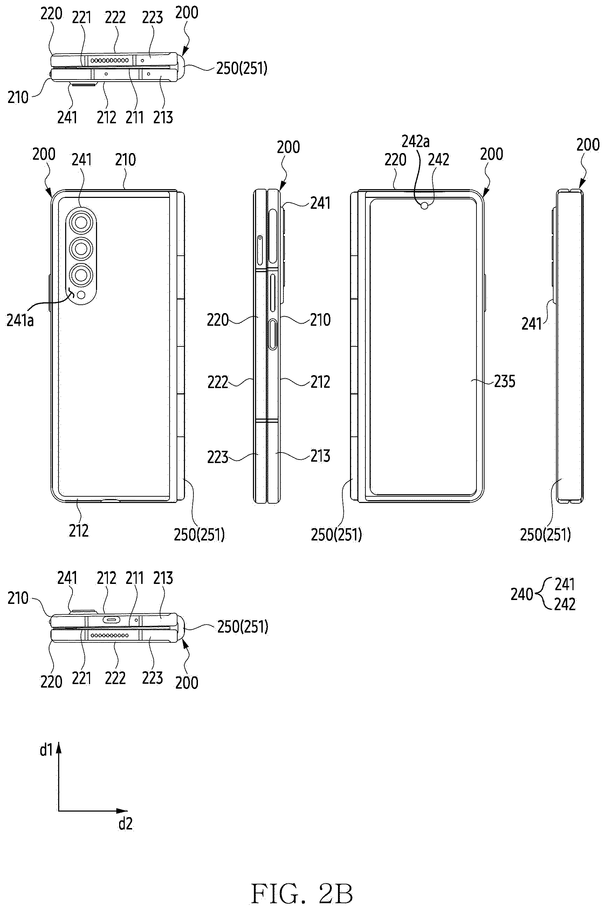

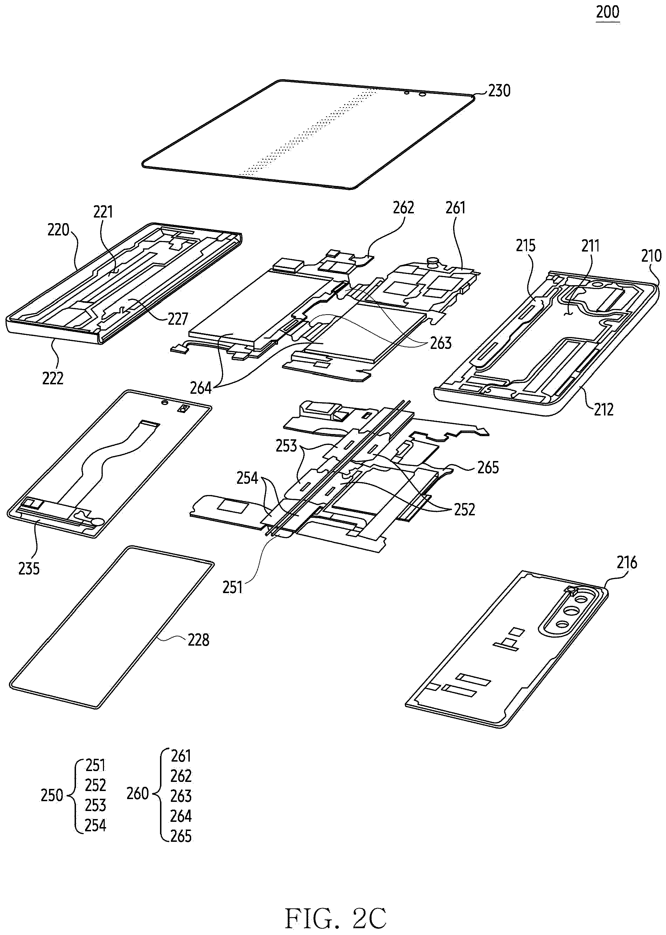

FIG. 2A illustrates an example of an unfolding state of an electronic device according to an embodiment, FIG. 2B illustrates an example of a folding state of an electronic device according to an embodiment, and FIG. 2C is an exploded view of an electronic device according to an embodiment.

Referring to FIGS. 2A, 2B, and 2C, an electronic device 200 (e.g., an electronic device 101 of FIG. 1) may include a first housing 210, a second housing 220, and a display 230, at least one camera 240 (e.g., a camera module 180 of FIG. 1), a hinge structure 250, and at least one electronic component 260.

The first housing 210 and the second housing 220 may form at least a portion of an outer surface of the electronic device 200 that may be gripped by a user. At least the portion of the outer surface of the electronic device 200 defined by the first housing 210 and the second housing 220 may contact a portion of the user's body when the electronic device 200 is used by the user.

According to an embodiment, the first housing 210 may include a first surface 211, a second surface 212 facing the first surface 211 and spaced apart from the first surface 211, and a first side surface 213 surrounding at least a portion of the first surface 211 and the second surface 212. The first side surface 213 may connect a periphery of the first surface 211 and a periphery of the second surface 212. The first surface 211, the second surface 212, and the first side surface 213 may define an inner space of the first housing 210. The first housing 210 may provide a space formed by the first surface 211, the second surface 212, and the first side surface 213 as a space for disposing components of the electronic device 200.

According to an embodiment, the second housing 220 may include a third surface 221, a fourth surface 222 facing the third surface 221 and spaced apart from the third surface 221, and a second side surface 223 surrounding at least a portion of the third surface 221 and the fourth surface 222. The second side surface 223 may connect a periphery of the third surface 221 and a periphery of the fourth surface 222. The third surface 221, the fourth surface 222, and the second side surface 223 may define an inner space of the second housing 220. According to an embodiment, the second housing 220 may provide a space formed by the third surface 221, the fourth surface 222, and the second side surface 223 surrounding at least the portion of the third surface 221 and the fourth surface 222 as a space for mounting components of the electronic device 200. According to an embodiment, the second housing 220 may be coupled to the first housing 210 so as to be rotatable with respect to the first housing 210.

According to an embodiment, the first housing 210 may include a first protective member 214, and the second housing 220 may include a second protective member 224. The first protective member 214 may be disposed on the first surface 211 along a periphery of the display 230. For example, the first protective member 214 may surround a periphery of a first display area 231 of the display 230. The first protective member 214 may be formed by being attached to the first side surface 213 of the first housing 210 or may be integrally formed with the first side surface 213. The second protective member 224 may be disposed on the third surface 221 along the periphery of the display 230. For example, the second protective member 224 may surround a periphery of a second display area 232 of the display 230. The second protective member 224 may be formed by being attached to the second side surface 223 of the second housing 220, or may be integrally formed with the second side surface 223. The first protective member 214 and the second protective member 224 may prevent inflow of a foreign substance (e.g., dust or moisture) through a gap between the display 230 and the first housing 210 and a gap between the display 230 and the second housing 220.

According to an embodiment, the first side surface 213 and the second side surface 223 may include a conductive material, a non-conductive material, or a combination thereof. For example, the second side surface 223 may include at least one conductive member 225 and at least one non-conductive member 226. The at least one conductive member 225 may include a plurality of conductive members spaced apart from each other, respectively. The at least one non-conductive member 226 may be disposed between a plurality of conductive members. The plurality of conductive members may be disconnected from each other by the at least one non-conductive member 226 disposed between the plurality of conductive members. The plurality of conductive members and a plurality of non-conductive members may form an antenna radiator together. The electronic device 200 may perform wireless communication with an external electronic device through the antenna radiator formed by the plurality of conductive members and the plurality of non-conductive members.

The display 230 may be configured to display visual information. According to an embodiment, the display 230 may be disposed on the first surface 211 of the first housing 210 and the third surface 221 of the second housing 220 across the hinge structure 250. For example, the display 230 may include a first display area 231 disposed on the first surface 211 of the first housing, the second display area 232 disposed on the third surface 221 of the second housing, and a third display area 233 disposed between the first display area 231 and the second display area 232. The first display area 231, the second display area 232, and the third display area 233 may form a front surface of the display 230. According to an embodiment, the display 230 may further include a sub-display panel 235 disposed on the fourth surface 222 of the second housing 220. For example, the display 230 may be referred to as a flexible display. According to an embodiment, the display 230 may include a window exposed toward the outside of the electronic device 200. The window may protect a surface of the display 230 and may transmit visual information provided by the display 230 to the outside of the electronic device 200 by including a substantially transparent material. For example, the window may include, but is not limited to, glass (e.g., ultrathin glass (UTG)) and/or polymer (e.g., polyimide (PI)).

The at least one camera 240 may be configured to obtain an image based on receiving light from an external subject of the electronic device 200. According to an embodiment, the at least one camera 240 may include first cameras 241, a second camera 242, and a third camera 243. The first cameras 241 may be disposed in the first housing 210. For example, the first cameras 241 may be disposed inside the first housing 210, and at least a portion thereof may be visible through the second surface 212 of the first housing 210. The first cameras 241 may be supported by a bracket (not illustrated) in the first housing 210. The first housing 210 may include at least one opening 241a overlapping the first cameras 241 when the second surface 212 is viewed from above. The first cameras 241 may obtain an image based on receiving light from the outside of the electronic device 200 through the at least one opening 241a.

According to an embodiment, the second camera 242 may be disposed in the second housing 220. For example, the second camera 242 is disposed inside the second housing 220 and may be visually recognizable through the sub-display panel 235. The second housing 220 may include at least one opening 242a overlapping the second camera 242 when the fourth surface 222 is viewed from above. The second camera 242 may obtain the image based on receiving the light from the outside of the electronic device 200 through the at least one opening 242a.

According to an embodiment, the third camera 243 may be disposed in the first housing 210. For example, the third camera 243 may be disposed inside the first housing 210, and at least a portion thereof may be visible through the first surface 211 of the first housing 210. For another example, the third camera 243 may be disposed inside the first housing 210, and at least a portion thereof may be visible through the first display area 231 of the display 230. The first display area 231 of the display 230 may include at least one opening (not illustrated) overlapping the third camera 243 when the display 230 is viewed from above. The third camera 243 may obtain the image based on receiving the light from the outside of the display 230 through the at least one opening.

According to an embodiment, the second camera 242 and the third camera 243 may be disposed below (e.g., direction toward the inside of the first housing 210 or the inside of the second housing 220) the display 230. For example, the second camera 242 and the third camera 243 may be under display cameras (UDC). **In** case that the second camera 242 and the third camera 243 are under display cameras, a region of the display 230 corresponding to positions of each of the second camera 242 and the third camera 243 may not be an inactive region. For example, in case that the second camera 242 and the third camera 243 are under display cameras, the region of the display 230 corresponding to the positions of each of the second camera 242 and the third camera 243 may have a pixel density lower than a pixel density of another region of the display 230. The inactive region of the display 230 may mean a region of the display 230 that does not include a pixel or does not emit the light to the outside of the electronic device 200. For another example, the second camera 242 and the third camera 243 may be punch hole cameras. **In** case that the second camera 242 and the third camera 243 are punch hole cameras, the region of the display 230 corresponding to the positions of each of the second camera 242 and the third camera 243 may be the inactive area. For example, in case that the second camera 242 and the third camera 243 are punch hole cameras, the region of the display 230 corresponding to the positions of each of the second camera 242 and the third camera 243 may include an opening that does not include a pixel.

According to an embodiment, the hinge structure 250 may rotatably connect the first housing 210 and the second housing 220. The hinge structure 250 may be disposed between the first housing 210 and the second housing 220 of the electronic device 200 so that the electronic device 200 may be bent, curved, or folded. For example, the hinge structure 250 may be disposed between a portion of the first side surface 213 and a portion of the second side surface 223 that face each other. The hinge structure 250 may change the electronic device 200 to an unfolding state in which directions in which the first surface 211 of the first housing 210 and the third surface 221 of the second housing 220 face are substantially the same each other or to a folding state in which the first surface 211 and the third surface 221 face. **In** case that the electronic device 200 is in the folding state, the first housing 210 and the second housing 220 may be laid over or overlapped each other, by facing each other.

According to an embodiment, when the electronic device 200 is in the folding state, the direction in which the first surface 211 faces and the direction in which the third surface 221 faces may be different from each other. For example, when the electronic device 200 is in the folding state, the direction in which the first surface 211 faces and the direction in which the third surface 221 faces may be opposite to each other. For another example, when the electronic device 200 is in the folding state, the direction in which the first surface 211 faces and the direction in which the third surface 221 faces may be inclined with respect to each other. In case that the direction in which the first surface 211 faces is inclined with respect to the direction in which the third surface 221 faces, the first housing 210 may be inclined with respect to the second housing 220.

According to an embodiment, the electronic device 200 may be foldable based on a folding axis f. The folding axis f may mean an imaginary line extending through a hinge cover 251 in a direction (e.g., d1 of FIGS. 2A and 2B) substantially parallel to a longitudinal direction of an electronic device 200, but is not limited thereto. For example, the folding axis f may be an imaginary line extending in a direction (e.g., d2 in FIGS. 2A and 2B) substantially perpendicular to the longitudinal direction of the electronic device 200. In case that the folding axis f extends in the direction substantially perpendicular to the longitudinal direction of the electronic device 200, the hinge structure 250 may connect the first housing 210 and the second housing 220 by extending in the direction parallel to the folding axis f. The first housing 210 and the second housing 220 may be rotatable by the hinge structure 250 extending in the direction substantially perpendicular to the longitudinal direction of the electronic device 200.

According to an embodiment, the hinge structure 250 may include the hinge cover 251, a first hinge plate 252, a second hinge plate 253, and a hinge module 254. The hinge cover 251 may surround internal components of the hinge structure 250 and may form an outer surface of the hinge structure 250. According to an embodiment, when the electronic device 200 is in the folding state, at least a portion of the hinge cover 251 surrounding the hinge structure 250 may be exposed to the outside of the electronic device 200 through between the first housing 210 and the second housing 220. According to an embodiment, when the electronic device 200 is in the unfolding state, the hinge cover 251 may not be exposed to the outside of the electronic device 200 by being covered by the first housing 210 and the second housing 220.

According to an embodiment, the first hinge plate 252 and the second hinge plate 253 may rotatably connect the first housing 210 and the second housing 220 by being coupled to the first housing 210 and the second housing 220, respectively. For example, the first hinge plate 252 may be coupled to a first front bracket 215 of the first housing 210, and the second hinge plate 253 may be coupled to a second front bracket 227 of the second housing 220. As the first hinge plate 252 and the second hinge plate 253 are coupled to the first front bracket 215 and the second front bracket 227, respectively, the first housing 210 and the second housing 220 may be rotatable according to the rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 with respect to the folding axis f, by including gears that are engaged with each other and rotatable. According to an embodiment, the hinge module 254 may be plural. For example, a plurality of hinge modules 254 may be disposed to be spaced apart from each other at both ends of the first hinge plate 252 and the second hinge plate 253, respectively.

According to an embodiment, the first housing 210 may include the first front bracket 215 and a first rear bracket 216, and the second housing 220 may include the second front bracket 227 and a second rear bracket 228. The first front bracket 215 and the first rear bracket 216 may support components of the electronic device 200. The first front bracket 215 may define the first housing 210, by being coupled to the first rear bracket 216. The first rear bracket 216 may define a portion of an outer surface of the first housing 210. The second front bracket 227 and the second rear bracket 228 may support the components of the electronic device 200. The second front bracket 227 may define the second housing 220, by being coupled to the second rear bracket 228. The second rear bracket 228 may define a portion of an outer surface of the second housing 220. For example, the display 230 may be disposed on one surface of the first front bracket 215 and one surface of the second front bracket 227. The first rear bracket 216 may be disposed on the other surface of the first front bracket 215 opposite to the one surface of the first front bracket 215. The second rear bracket 228 may be disposed on the other surface of the second front bracket 227 opposite to the one surface of the second front bracket 227. The sub-display panel 235 may be disposed between the second front bracket 227 and the second rear bracket 228.

According to an embodiment, a portion of the first front bracket 215 may be surrounded by the first side surface 213, and a portion of the second front bracket 227 may be surrounded by the second side surface 223. For example, the first front bracket 215 may be integrally formed with the first side surface 213, and the second front bracket 227 may be integrally formed with the second side surface 223. For another example, the first front bracket 215 may be formed separately from the first side surface 213, and the second front bracket 227 may be formed separately from the second side surface 223.

The at least one electronic component 260 may implement various functions for providing to the user. According to an embodiment, the at least one electronic component 260 may include a printed circuit board 261, a printed circuit board 262, a flexible printed circuit board 263, a battery 264 (e.g., a battery 189 of FIG. 1), and/or an antenna 265 (e.g., an antenna module 197 of FIG. 1). The printed circuit board 261 and the printed circuit board 262 may form an electrical connection between components within the electronic device 200, respectively. For example, components (e.g., a processor 120 of FIG. 1) for implementing an overall function of the electronic device 200 may be disposed on the printed circuit board 261, and electronic components for implementing some function of the printed circuit board 261 may be disposed on the printed circuit board 262. For another example, components for operating the sub-display panel 235 disposed on the fourth surface 222 may be disposed on the printed circuit board 262.

According to an embodiment, the printed circuit board 261 may be disposed in the first housing 210. For example, the printed circuit board 261 may be disposed on the one surface of the first front bracket 215. According to an embodiment, the printed circuit board 262 may be disposed in the second housing 220. For example, the printed circuit board 262 may be spaced apart from the printed circuit board 261 and may disposed on the one surface of the second front bracket 227. The flexible printed circuit board 263 may connect the printed circuit board 261 and the printed circuit board 262. For example, the flexible printed circuit board 263 may extend from the printed circuit board 261 to the printed circuit board 262.

The battery 264 is a device for supplying power to at least one component of the electronic device 200, and may include, for example, a non-rechargeable primary battery, a rechargeable secondary battery, or a fuel cell. At least a portion of the battery 264 may be disposed on substantially the same plane as the printed circuit board 261 or the printed circuit board 262.

The antenna 265 may be configured to receive power or a signal from the outside of the electronic device 200. According to an embodiment, the antenna 265 may be disposed between the first rear bracket 216 and the battery 264. The antenna 265 may include, for example, a near field communication (NFC) antenna, an antenna module, and/or a magnetic secure transmission (MST) antenna. The antenna 265 may, for example, perform short-range communication with an external device, or wirelessly transmit and receive power required for charging.

On the other hand, in FIGS. 2A, 2B, and 2C, the electronic device 200 is illustrated as a device that operates according to the in-fold method (or in-fold type) in which the display 230 is not exposed to the outside of the electronic device 200 within the folding state of the electronic device 200, but is not limited thereto. For example, the electronic device 200 may operate according to an out fold method (or out-fold type) in which the display 230 is exposed to the outside of the electronic device 200 within the folding state of the electronic device 200. For example, in case that the electronic device 200 is an out foldable device, a first display region 231, a second display region 232, and a third display region 233 of the display 230 may be exposed to the outside of the electronic device 200 within the folding state of the electronic device 200.

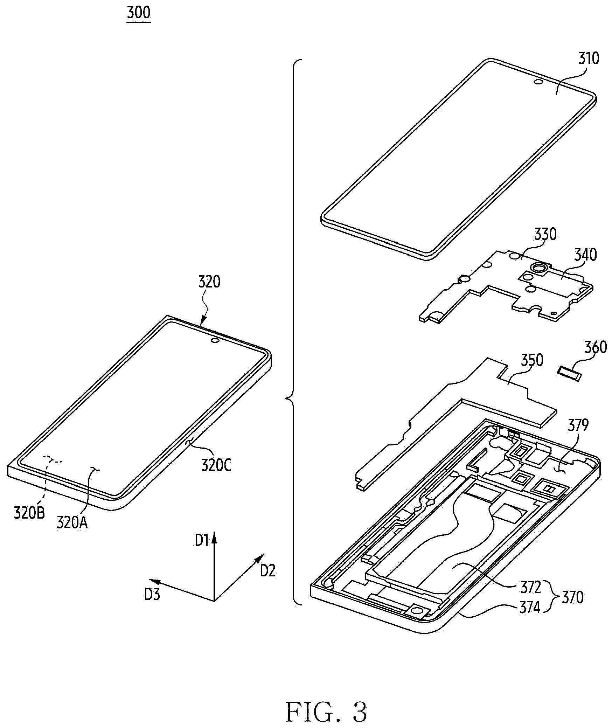

FIG. 3 is a perspective view of an electronic device according to an embodiment. Referring to FIG. 3, an electronic device 300 (e.g., an electronic device 200 of FIG. 2A) according to an embodiment may include a housing 320. The housing 320 may form a front surface 320A, a rear surface 320B, and a side surface 320C of the electronic device 300. The housing 320 may include a display 310 and a frame 370. The frame 370 may include a side member 374 surrounding a periphery and rear surface 320B of the display 310 so that an inner space is formed, and a support member 372 extending from the side member 374 to the inner space. The side member 374 and the support member 372 may be integrally formed, but are not limited thereto. The support member 372 and/or the side member 374 of the frame 370 may be formed of a conductive material (e.g., metal) and/or a non-conductive material (e.g., resin).

In an embodiment, the display 310 may form a portion of the front surface 320A of the electronic device 300. The side member 374 may form a remaining portion of the front surface 320A and the side surface 320C. The rear surface 320B of the electronic device 300 may be at least partially formed by another display (e.g., a display 230 of FIG. 2A) or a cover (e.g., a first rear bracket 216 of FIG. 2A) disposed under the support member 372. The housing 320 and the display 310 may be referred to as a second housing 220 and a sub-display panel 235 of FIG. 2A, respectively, but are not limited thereto.

The electronic device 300 according to an embodiment may include a speaker module 340, a bracket 330, a printed circuit board 350, and a sealing member 360 disposed in the housing 320. The speaker module 340 may include a diaphragm configured to generate sound. The speaker module 340 may be coupled to the bracket 330. The bracket 330 may be disposed on the printed circuit board 350. As the bracket 330 is disposed on the printed circuit board 350, the speaker module 340 coupled to the bracket 330 may be accommodated in a recess 379 formed in the support member 372.

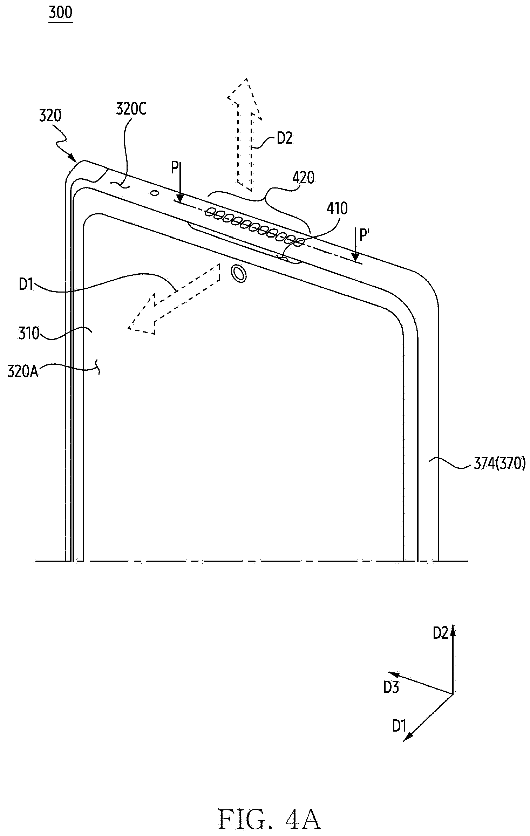

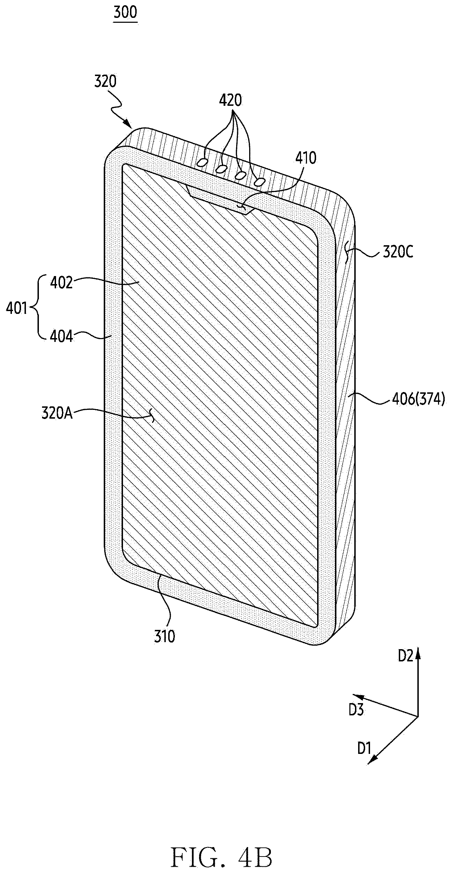

FIGS. 4A and 4B indicates a housing of an electronic device according to an embodiment. Referring to FIG. 4A, an electronic device 300 according to an embodiment may include a first hole 410 formed in a front surface 320A and a plurality of second holes 420 formed in a side (or edge) surface 320C. The sound may be output through the first hole 410 and the plurality of second holes 420. For example, the sound may be output through the first hole 410 in a first direction D1 (or the front surface 320A) that the display 310 faces, and the sound may be output through the plurality of second holes 420 in a second direction D2 (or the side surface 320C) that a side member 374 faces. The second direction D2 may be perpendicular to the first direction D1. The second direction D2 may be substantially parallel to the front surface 320A perpendicular to the first direction D1, but is not limited thereto.

Referring to FIGS. 4A and 4B, the electronic device 300 according to an embodiment may include a front section 401 and a side section 406. The front section 401 may include a first part 402 formed by the display 310 and a second part 404 surrounding the display 310. The second part 404 may extend from the side section 406. The second part 404 and the side section 406 may be formed by the side member 374.

In an embodiment, the first hole 410 may be formed in the second part 404 of the front section 401. The first hole 410 may, for example, be defined between the first part 402 and the second part 404. The first hole 410 may penetrate the second part 404 of the front section 401 in the first direction D1 that the display 310 faces. The plurality of second holes 420 may be formed in the side section 406. The plurality of second holes 420 may penetrate the side section 406 in the second direction D2. The plurality of second holes 420 may be arranged along a third direction D3 perpendicular to the first direction D1 and the second direction D2 on the side section 406. The plurality of second holes 420 may be spaced apart from each other, for example in a linear array.

In an embodiment, the first hole 410 and the plurality of second holes 420 may be located on one side of the display 310. For example, when viewed in the first direction D1, the first hole 410 and the plurality of second holes 420 may be located on a upper side among the sides of the display 310, but are not limited thereto.

In an embodiment, it has been described that the first hole 410 is formed in a single number and the plurality of second holes 420 are formed in a plural number, but it is not limited thereto. For example, the first hole 410 may be formed in the plural number and may be referred to as a plurality of first holes. For example, the plurality of second holes 420 may be formed as one hole, and may be referred to as a second hole.

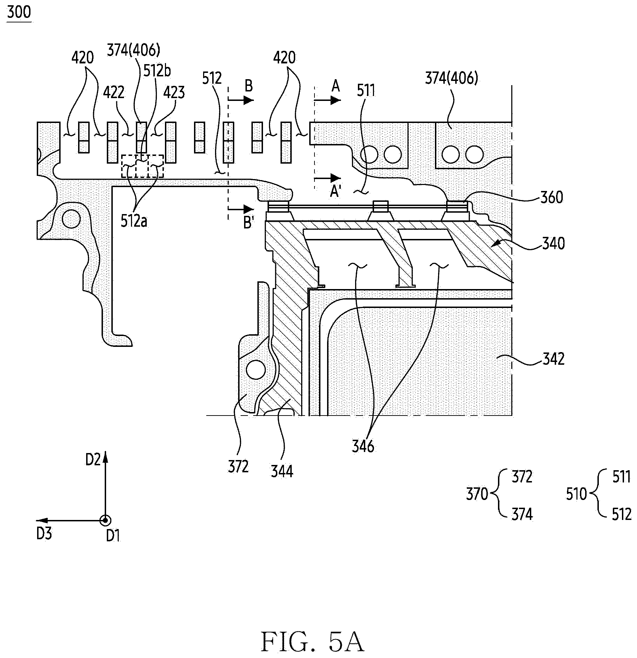

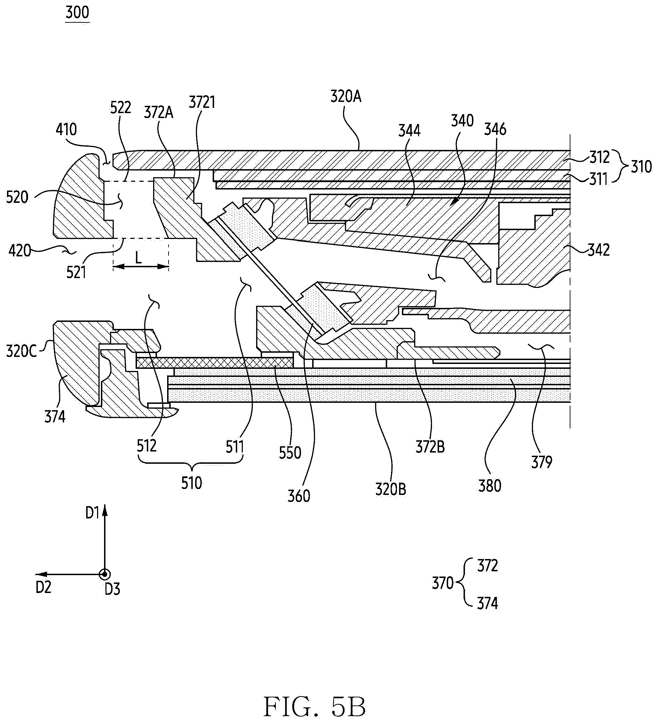

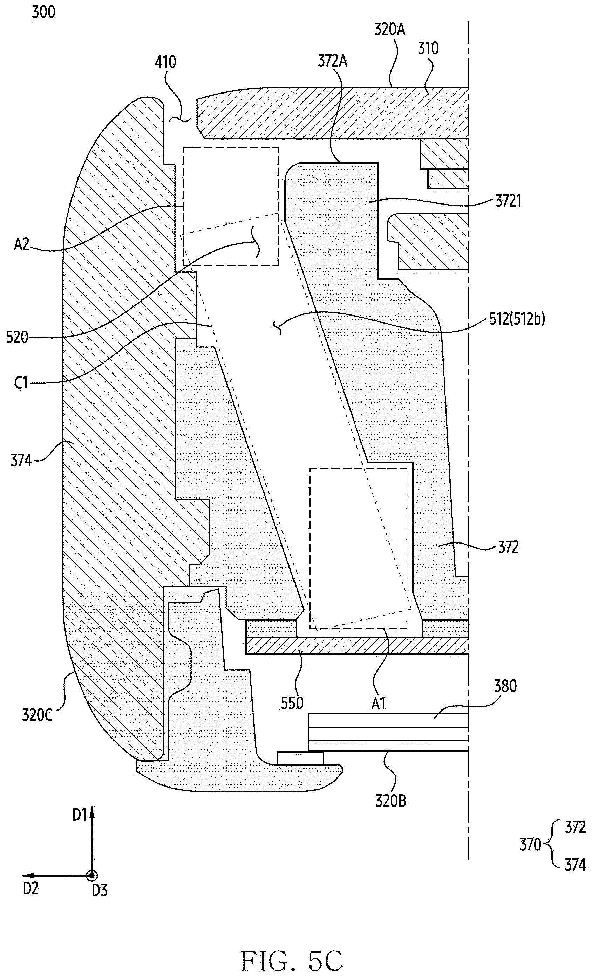

FIG. 5A is a cross-sectional view for describing an acoustic conduit through which sound of a speaker module is output, according to an embodiment. FIG. 5A is a cross-sectional view taken along line P-P' of FIG. 4A. FIG. 5B is a cross-sectional view taken along line A-A' of FIG. 5A. FIG. 5C is a cross-sectional view taken along line B-B' of FIG. 5A.

Referring to FIGS. 5A, 5B, and 5C, a speaker module 340 may include a casing 344 and a speaker 342 within the casing 344. The casing 344 may provide a space in which the internal configuration of the speaker module 340 is disposed, and may form a conduit 346 outputting sound output from the speaker 342 to the outside of the speaker module 340. The casing 344 may be accommodated in a recess 379 of a frame 370. The casing 344 may support a display 310 together with the first surface 372 of the frame 370. The speaker 342 may include a diaphragm generating sound, and a coil and a magnet configured to vibrate the diaphragm based on an electrical signal. The conduit 346 may be formed in plural as illustrated in FIG. 5A, but it is not limited thereto.

In an embodiment, the display 310 may include a display panel 311 and a cover 312 disposed on the display panel 311. The cover 312 may form a first hole 410 together with the side member 374. For example, a portion of a periphery of the first hole 410 may be defined by the cover 312, and another portion may be defined by the side member 374.

The electronic device 300 according to an embodiment may include another display 310 disposed on a second surface 372B of a support member 372. The other display 310 may be, for example, a display 230 of FIG. 2A, but is not limited thereto. In case that the other display 310 is the display 230 of FIG. 2A, a substantially transparent window may be disposed on the other display 310. Otherwise, the other display 310 may be replaced with a substantially opaque plate.

The electronic device 300 according to an embodiment may include an acoustic conduit for transmitting sound output from the speaker module 340 to the outside. For example, the electronic device 300 may include an acoustic conduit 510 and an acoustic conduit 520 formed by the frame 370.

In an embodiment, the first conduit 510 may extend from the speaker module 340 (e.g., conduit 346) to a plurality of second holes 420 so that the speaker 342 (e.g., the diaphragm) is connected (i.e. acoustically) to the plurality of second holes 420. For example, the first conduit 510 may connect the conduit 346 formed in the casing 344 of the speaker module 340 to the plurality of second holes 420. For example, the first conduit 510 may include a first section 511 extending from the speaker module 340 (or the casing 344) and a second section 512 extending from the first section 511 so that the first section 511 is connected to the plurality of second holes 420. For example, the plurality of second holes 420 may be arranged along a third direction D3, and the second section 512 of the first conduit 510 may extend along the third direction D3 so as to overlap the plurality of second holes 420 when viewed in the second direction D2. The second section 512 of the first conduit 510 may include first portions 512a spaced apart from each other based on the third direction D3 and second portions 512b between the first portions 512a. Each of the first portions 512a may be directly connected to each of the plurality of second holes 420. For example, the first portions 512a may be directly connected to the second holes 422 and 423, respectively. The second portions 512b may be closed by the frame 370 with respect to the second direction D2. For example, one side of the second portions 512b may be closed by a side member 374 (or a side section 406), and the other side may be closed by the support member 372. The first section 511 of the first conduit 510 may connect the conduit 346 of the speaker module 340 to the second section 512. The second section 512 of the first conduit 510 may connect the first section 511 to the plurality of second holes 420.

In an embodiment, the second section 512 of the first conduit 510 may have a diagonal shape. For example, the second section 512 of the first conduit 510 may include a portion inclined at an acute angle toward the first hole 410 with respect to the second direction D2. For example, each of the second portions 512b of the first conduit 510 may be inclined at the acute angle toward the first hole 410 with respect to the second direction D2.

In an embodiment, the second conduit 520 may be branched from the first conduit 510. The second conduit 520 may extend from the first conduit 510 in order to connect the speaker 342 (e.g., the diaphragm) to the first hole 410. The second conduit 520 may extend from a first opening 521 (which may also be described as a mouth, entrance, inlet, first cross section, connection, or junction) connected to the second section 512 of the first conduit 510 to a second opening 522 (which may be referred to as an exit, outlet, or second cross section) formed on (or in) a first surface 372A of the frame 370. In addition, the second conduit 520 may extend in the third direction D3 to be connected to the first portions 512a and the second portions 512b of the first conduit 510. For example, the second conduit 520 may extend in the third direction D3 to be connected to the upper portions (e.g., a first direction D1) of the first portions 512a and the second portions 512b. The second conduit 520 may be connected to the second section 512 of the first conduit 510. The second conduit 520 may connect the second section 512 of the first conduit 510 to the first hole 410. The second conduit 520 may extend from the second section 512 of the first conduit 510 to the first hole 410.

In an embodiment, the second conduit 520 may have the diagonal shape. For example, the second conduit 520 may include a section inclined at the acute angle toward the first hole 410 with respect to the second direction D2. For example, based on a cross section cut in the second direction D2, an imaginary line segment connecting center of the first opening 521 and center of the second opening 522 may be defined. The imaginary line segment may be inclined at the acute angle toward the first hole 410 with respect to the second direction D2. Based on the second direction D2, one point of a periphery of the first opening 521 furthest from the side member 374 may be located farther from the side member 374 than one point of a periphery of the second opening 522 furthest from the side member 374. An area of the first opening 521 may be larger than an area of the second opening 522 based on the cross section cut in the second direction D2, but is not limited thereto. Thus, the second conduit may be tapered; it may taper (reduce in at least one dimension, and/or in cross-sectional area) from the first opening 521 to the second opening 522 and/or to the first hole 410. Additionally, a sidewall (defining the right-hand edge of the first opening 521 in FIG. 5B) of the second conduit 520 (provided by a surface of the frame 370) may meet a sidewall (horizontal, and downward-facing in FIG. 5B) of the first conduit at an obtuse angle, such that a notional center-line or center-path (or sound path) of the second conduit is inclined at an acute angle to the second direction and/or a notional center-line or center-path (or sound path) of the first conduit. By employing a second conduit that branches off from the first conduit at an acute angle, and which tapers towards the first hole (or in other words, widens from the first hole towards the interface, connection, or junction with the first conduit), the sound output from the first hole may be increased.

In an embodiment, the support member 372 may include the first surface 372A for supporting the display 310 and the second surface 372B opposite to the first surface 372A and supporting another display 310. The support member 372 may include a portion 3721 partially forming the second conduit 520 and supporting the display 310. The portion 3721 may be located between the recess 379 and the second conduit 520. The portion 3721 may support the display 310 together with the speaker module 340 accommodated in the recess 379.

The electronic device 300 according to an embodiment may include an acoustic membrane 550 closing one side of the first conduit 510. For example, the acoustic membrane 550 may close a section in which the conduit 510 is opened in a direction opposite to the first direction D1. Through the opened section of the first conduit 510, in order to form the second conduit 520, a tool processing the frame 370 may enter.

In an embodiment, a sealing member 360 may be disposed between the speaker module 340 and the support member 372. For example, the sealing member 360 may be disposed between the casing 344 and the support member 372. The sealing member 360 may be disposed between the conduit 346 formed by the casing 344 and the first conduit 510. The sealing member 360 may be inclined toward the display 310 with respect to the second direction D2. The sealing member 360 may prevent a foreign substance (e.g., dust) from flowing into the speaker module 340, by covering the conduit 346 of the speaker module 340. In addition, the sealing member 360 may prevent the sound from leaking between the speaker module 340 and the support member 372. The sealing member 360 may include a rubber for preventing sound leakage and a mesh-shaped membrane for preventing the foreign material from entering.

In an embodiment, an outlet of the conduit 346 connected to the sealing member 360 and the first conduit 510 may be formed on one surface of the casing 344. The one surface of the casing 344 may support the sealing member 360. The one surface of the casing 344 may be inclined in substantially the same direction as the inclined section of the second conduit 520. For example, the one surface of the casing 344 may be inclined at the acute angle toward the display 310 (or the first hole 410) with respect to the second direction D2.

In an embodiment, the sealing member 360 may be disposed between the one surface of the casing 344 and one surface of the frame 370. The one surface of the frame 370 may support the sealing member 360. An inlet of the first conduit 510 connected to the sealing member 360 may be formed on the one surface of the frame 370. The one surface of the frame 370 may be inclined in substantially the same direction as the inclined section of the second conduit 520. For example, the one surface of the frame 370 may be inclined at the acute angle toward the display 310 (or the first hole 410) with respect to the second direction D2.

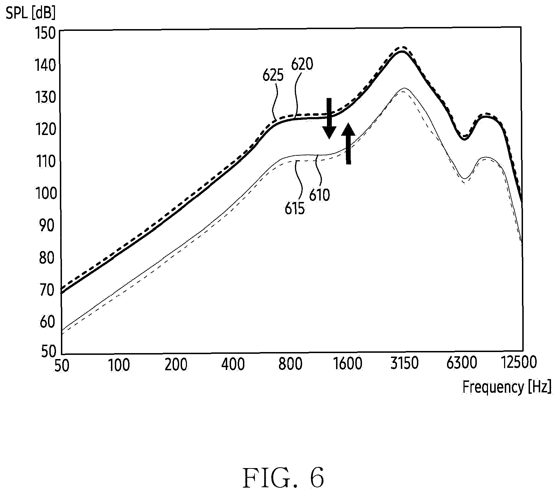

FIG. 6 is a graph indicating a sound pressure level. Graphs 610 and 615 of FIG. 6 indicate sound pressure levels radiated through a first hole 410, and graphs 620 and 625 indicate sound pressure levels radiated through a plurality of second holes 420. The graphs 610 and 620 indicate a sound pressure level of an electronic device having an acoustic conduit of a diagonal shape according to an embodiment, and the graphs 615 and 625 indicate a sound pressure level of an electronic device not including the acoustic conduit of the diagonal shape according to a comparative embodiment. Referring to FIG. 6, as the electronic device 300 according to an embodiment includes the acoustic conduit of the diagonal shape, a sound pressure level radiated in a first direction D1 through the first hole 410 may be improved.

In general, the electronic device may include both a loud speaker and an earpiece speaker having different characteristics and uses. However, this wastes a mounting space of a device. If only one of the loud speaker and the earpiece speaker is mounted on the electronic device, it may be difficult to secure required sound performance. This is because a direction in which sound is required to be output is different in that a user generally hold the device to his or her ear when making a call, but not when playing media. Since the acoustic energy output from a speaker module 340 is preserved, when some of the plurality of second holes 420 of the second direction D2 are closed, the sound performance deteriorates when playing multimedia. In order to prevent this, increasing the number of the plurality of second holes 420 may increase sound leakage when making a call. In other words, improving the sound output in the first direction D1 by the above-described method may be difficult to be applied. In order to further transmit the acoustic energy output from the speaker module 340 in the first direction D1, a volume of the second conduit 520 connected to the first hole 410 may be increased. For example, a width of a second opening 522 of the second conduit 520 may be increased by reducing a thickness of a portion 3721 of a support member 372. However, in order to stably support a display 310, the thickness of the portion 3721 of the support member 372 may be difficult to reduce.

The electronic device 300 according to an embodiment may not include the earpiece speaker independent of the speaker module 340. As described above, the electronic device 300 according to an embodiment may increase sound (e.g., call audio) output in the first direction and may reduce sound (e.g., media reproduction sound) output in the second direction, through a first conduit 510 and a second conduit 520 including the diagonal shape. For example, referring to FIG. 5B, sound pressure radiated in the first direction D1 may be improved by forming a diameter L of the first opening 521 to be larger than the first opening 521 so that the second conduit 520 has the diagonal shape. In addition, referring to FIG. 5C, the acoustic conduit of the electronic device 300 may include a first region A1 formed by a second section 512 of the first conduit 510 and a second region A2 formed by the second conduit 520. A section between the first region A1 and the second region A2 may be formed as a conduit C1 having the diagonal shape. Referring to FIGS. 5B and 5C, sound output from the speaker module 340 may be transmitted to the first conduit 510 and the second conduit 520 of FIG. 5B. The sound transmitted to the first conduit 510 and the second conduit 520 of FIG. 5B may be transmitted to a first section 511 and the second section 512 of FIG. 5C along a third direction D3. As the first region A1 has a larger area than the second region A2, sound pressure transmitted along the third direction D3 may increase. As such, the increased sound pressure is radiated through the conduit C1 having the diagonal shape and the first region A1, and as a result, the sound pressure in the first direction D1 may be improved. As described above, required sound performance may be secured by appropriately adjusting the balance of the sound. In addition, since the portion 3721 for supporting the display 310 is not reduced in order to increase a size of the second conduit 520, stable support of the display 310 may be possible while securing sound performance.

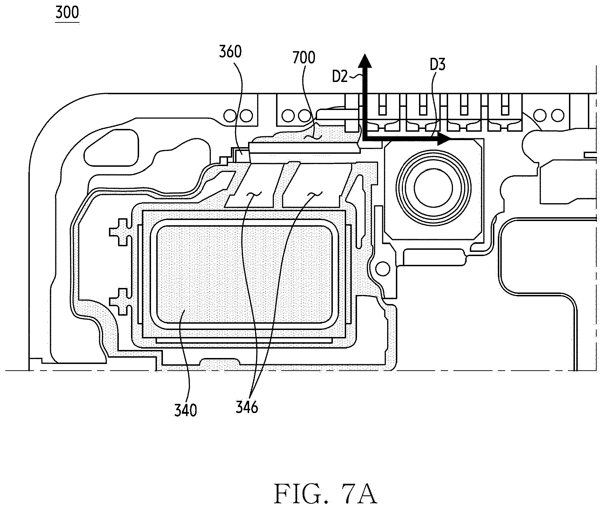

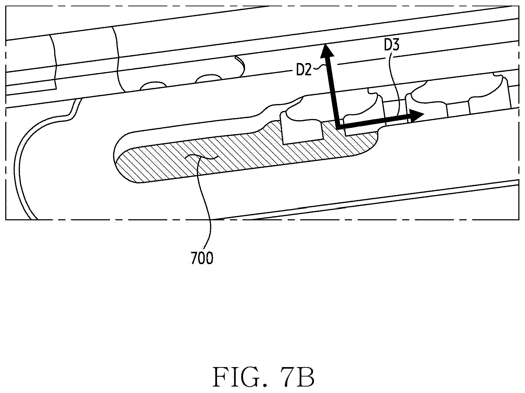

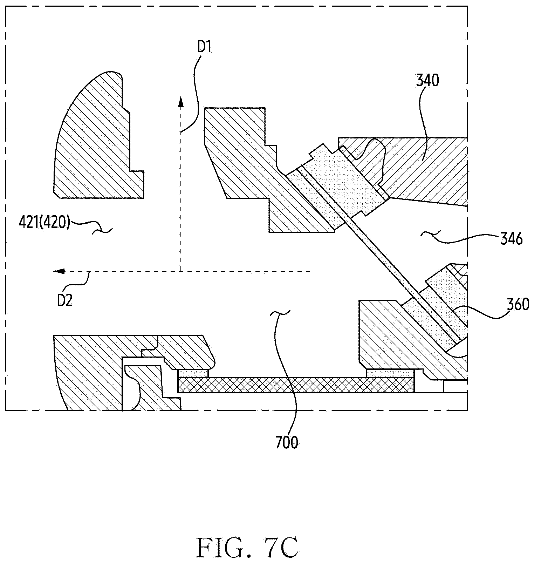

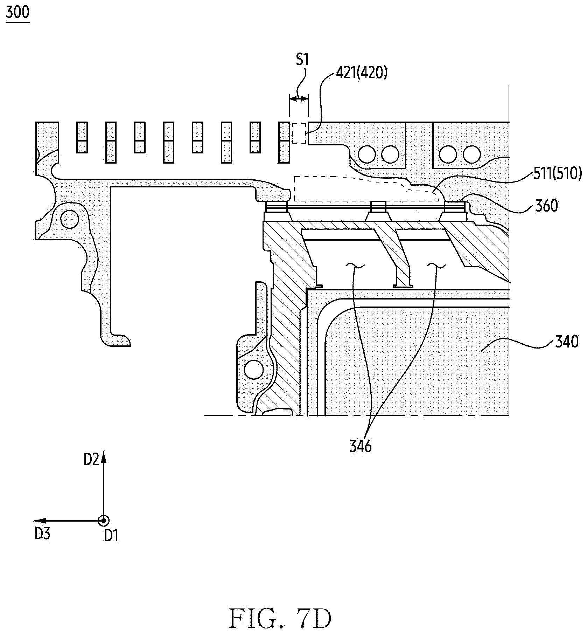

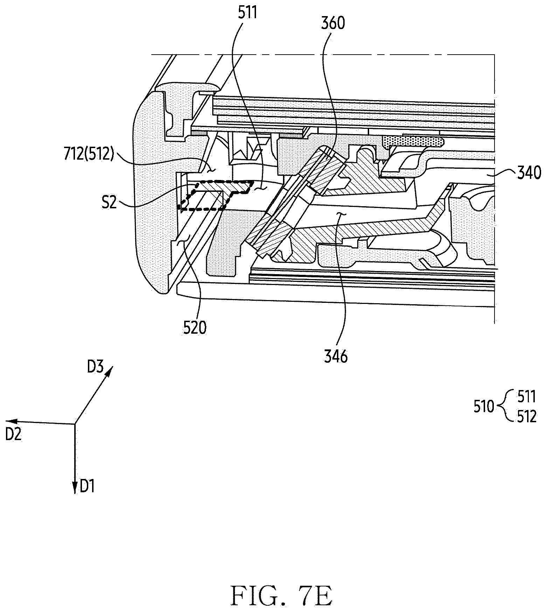

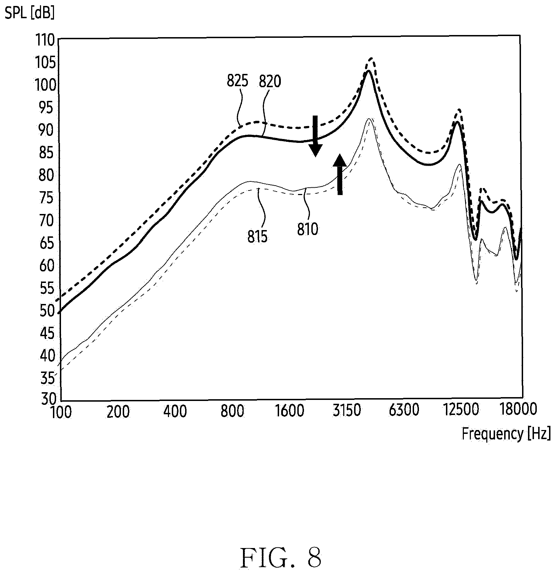

FIG. 7A is a diagram indicating an acoustic branching space of an electronic device, according to an embodiment. FIGS. 7B and 7C is a diagram indicating a direction in which sound is branched in an acoustic branching space of an electronic device, according to an embodiment. FIG. 7D is a diagram for indicating an area radiated in a second direction D2 in an acoustic branching space, according to an embodiment. FIG. 7E is a diagram for indicating an area radiated in a first direction D1 in an acoustic branching space, according to an embodiment. FIG. 8 is a graph indicating a sound pressure level in each direction according to an area ratio of an acoustic branching space, according to an embodiment.

Referring to FIGS. 7A, 7B, and 7C, an electronic device 300 according to an embodiment may include an acoustic branching space 700. The acoustic branching space 700 may branch sound output from a speaker module 340, by being connected to a conduit 346 of the speaker module 340. For example, the sound output from the speaker module 340 may branch in the first direction D1, the second direction D2, and a third direction D3 in the acoustic branching space 700.

In an embodiment, a ratio of sound branched in each direction may vary according to a shape of the acoustic branching space 700. For example, referring to FIG. 7D, a plurality of second holes 420 may include at least one hole 421 overlapping a first section 511 of a first conduit 510 based on the second direction D2. Sound pressure radiated in the second direction D2 may vary according to an area S1 of the at least one hole 421. The area S1 may be an area along the second direction D2 (e.g., an area when viewed in the second direction). Referring to FIG. 7E, a second section 512 of the first conduit 510 may include a portion 712 overlapping the second conduit 520 based on the first direction D1 while overlapping the first section 511 based on the second direction D2. Sound pressure radiated in the first direction D1 may vary according to an area S2 of the portion 712. The area S2 of the portion 712 may be an area based on a surface perpendicular to the first direction D1. In an embodiment, the area S2 may be larger than the area S1. In an embodiment, in case that the at least one hole 421 is implemented as one hole, the area S1 may mean an area of the first hole overlapping the first section 511 of the first conduit 510 based on the second direction D2.

In an embodiment, a ratio of sound radiated in the first direction D1 and sound radiated in the second direction D2 (i.e., sound in the first direction D1/sound in the second direction D2) may vary, according to a ratio of the area S2 for the first direction D1 and the area S1 for the second direction D2 (i.e., the area S2/the area S1). For example, referring to FIG. 8, graphs 810 and 815 indicate a sound pressure level radiated in the first direction D1 through a first hole 410, and graphs 820 and 825 indicate a sound pressure level radiated in the second direction D2 through the plurality of second holes 420. The graphs 810 and 820 indicate a sound pressure level when the ratio (S2/S1) of the area S2 for the first direction D1 to the area S1 for the second direction D2 is relatively high, and the graphs 815 and 825 indicate a sound pressure level when the ratio (S2/S1) of the area S2 for the first direction D1 to the area S1 for the second direction D2 is relatively low. As illustrated in FIG. 8, by increasing the area S2 for the first direction D1 than the area S1 for the second direction D2, the sound radiated in the first direction D1 may be improved, and the sound radiated in the second direction D2 may be reduced.

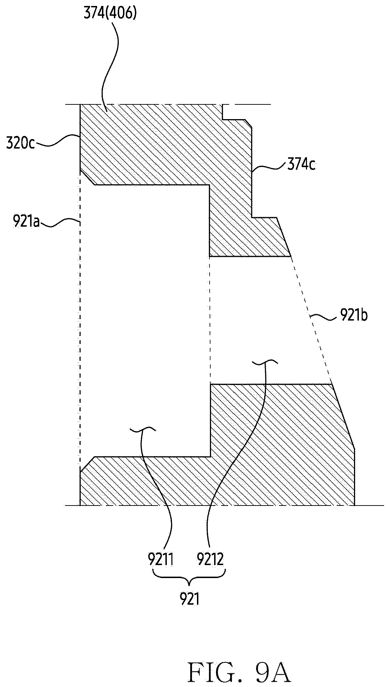

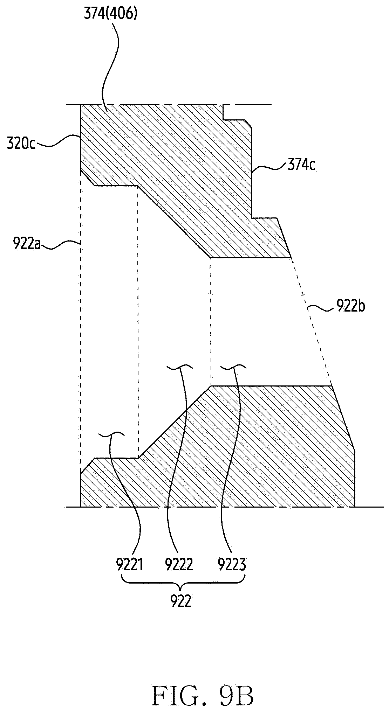

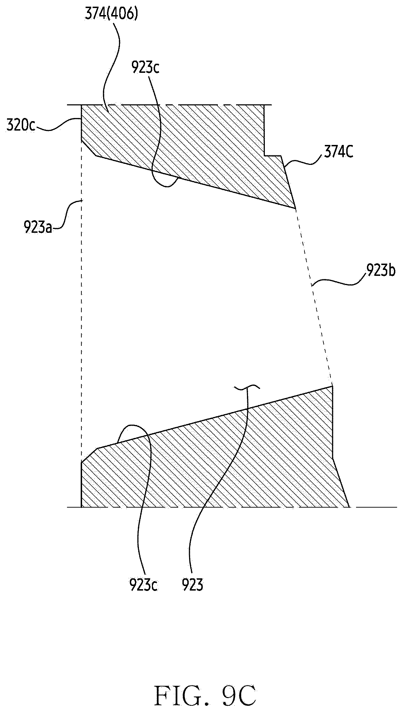

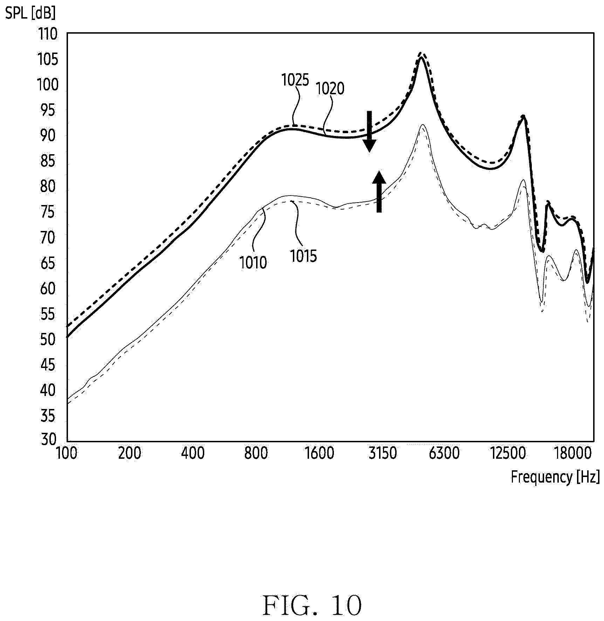

FIGS. 9A, 9B, and 9C illustrate various shapes of a plurality of second holes according to an embodiment. FIG. 10 is a graph indicating sound pressure as an inner cross-sectional area of a plurality of second holes is reduced, according to an embodiment.

Referring to FIGS. 9A, 9B, and 9C, in an embodiment, a plurality of second holes 420 may include at least one of a first acoustic hole 921, a second acoustic hole 922, and a third acoustic hole 923.

Referring to FIG. 9A, the first acoustic hole 921 may extend from a first opening 921a formed in an outer surface 320C of a side member 374 forming a side section 406 to a second opening 921b formed in an inner surface 374C of the side member 374. The first acoustic hole 921 may include a first section 9211 extending from the first opening 921a and a second section 9212 connecting the first section 9211 to the second opening 921b. A diameter (or cross-sectional area) of the second section 9212 may be formed to be smaller than the first section 9211. A diameter (or cross-sectional area) of the second opening 921b may be formed to be smaller than the first opening 921a. Thus, the first acoustic hole 921 may be tapered. It may taper inwardly, from its first (or external) opening to its second (or internal) opening. In this example, part of this progressive tapering is gradual (or continuous) (see the initial sloped sidewall portions at the outer end of the hole 921), and part is stepped (or discontinuous) (see the step in cross section near the mid-point of the hole 921, i.e. at the junction or interface between the first section 9211 and the second section 9212).

Referring to FIG. 9B, the second acoustic hole 922 may extend from a first opening 922a formed in the outer surface 320C of the side member 374 forming the side section 406 to a second opening 922b formed in the inner surface 374C of the side member 374. The second acoustic hole 922 may include a first section 9221 extending from the first opening 922a, a second section 9222 connecting the first section 9221 to a third section 9223, and a third section 9223 connected to the second opening 922b. A diameter (or cross-sectional area) of the third section 9223 may be formed to be smaller than the first section 9221. The second section 9222 may be formed such that the diameter (or cross-sectional area) decreases as the second section 9221 extends from the first section 9221 to the third section 9223. A diameter (or cross-sectional area) of the second opening 922b may be formed to be smaller than the first opening 922a. Again, the second acoustic hole is tapered, becoming progressively more narrow from its first opening 922a to its second opening 922b. A central portion of this tapering is gradual (continuous) in this example, with the sidewalls of the second section 9222 being sloped inwardly. Thus, the second section is tapered. The third section 9223 may not itself be tapered, and it may have parallel sidewalls in at least one cross section (as shown in FIG. 9B).

Referring to FIG. 9C, the third acoustic hole 923 may extend from a first opening 923a formed in the outer surface 320C of the side member 374 forming the side section 406 to a second opening 923b formed in the inner surface 374C of the side member 374. A diameter (or cross-sectional area) of the second opening 923b may be formed to be smaller than the first opening 923a. For example, the third acoustic hole 923 may be formed such that the diameter (or cross-sectional area) gradually decreases as the third acoustic hole 923 extends from the first opening 923a to the second opening 923b. An inner circumferential surface 923c of the third acoustic hole 923 may extend from a circumference of the first opening 923a to a circumference of the second opening 923b without a step. Again, the third acoustic hole may thus be tapered.

As described above, a structure in which the cross-sectional area decreases from the outside to the inside may reduce sound pressure radiated through the first acoustic hole 921, the second acoustic hole 922, and the third acoustic hole 923. Accordingly, sound pressure radiated through the first hole 410 of a direction different from the first acoustic hole 921, the second acoustic hole 922, and the third acoustic hole 923 may be improved. For example, referring to FIG. 10, graphs 1010 and 1015 indicate a sound pressure level radiated through the first hole 410, and graphs 1020 and 1025 indicate a sound pressure level radiated through the plurality of second holes 420. According to an embodiment, the graphs 1010 and 1020 indicate a sound pressure level in case that an inner cross-sectional area of the plurality of second holes 420 is reduced, and the graphs 1015 and 1025 indicate a sound pressure level in case that a cross-sectional area of the plurality of second holes 420 is constant. As illustrated in FIG. 10, as the inner cross-sectional area of the plurality of second holes 420 is reduced, sound pressure of the first direction D1 through the first hole 410 may increase, and sound pressure of the second direction D2 through the plurality of second holes 420 may decrease.

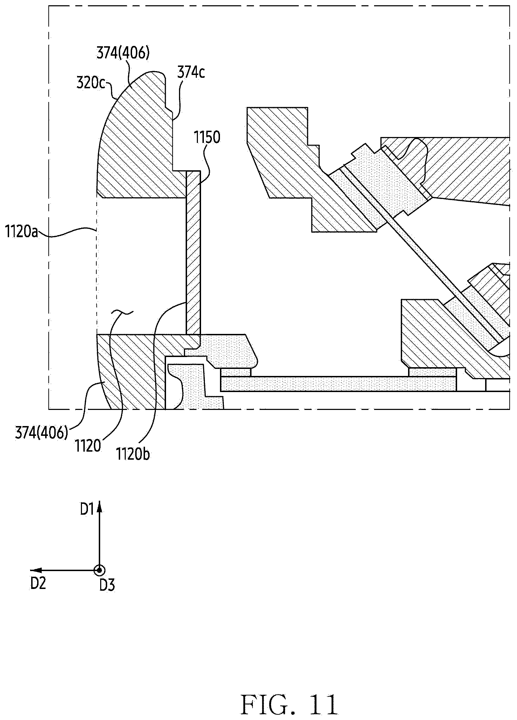

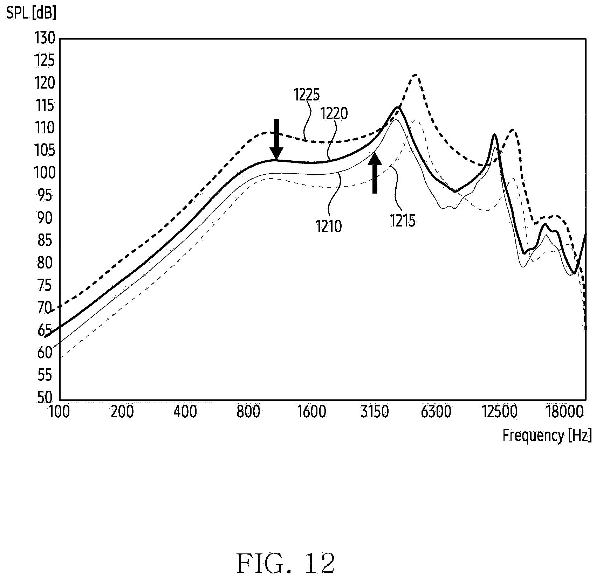

FIG. 11 is a diagram indicating an electronic device to which an acoustic member is applied, according to an embodiment. FIG. 12 is a graph indicating sound pressure according to application of an acoustic member.

Referring to FIG. 11, an electronic device 300 according to an embodiment may further include an acoustic member 1150. A plurality of second holes 420 according to an embodiment may include at least one hole 1120 extending from a first opening 1120a formed in an outer surface 320C of a side member 374 to a second opening 1120b formed in an inner surface 374C of the side member 374. The acoustic member 1150 may be disposed on the inner surface 374C of the side member 374 to cover the at least one hole 1120. The acoustic member 1150 may cover the second opening 1120b of the at least one hole 1120. The acoustic member 1150 may be formed of a material having a designated acoustic impedance in order to prevent sound leakage. For example, the acoustic member 1150 may be formed of a material having an acoustic impedance of about 1500 rayl (or pa·s/m³) or more, but is not limited thereto. The acoustic member 1150 may be applied to a first acoustic hole 921 of FIG. 9A, a second acoustic hole 922 of FIG. 9B, and a third acoustic hole 923 of FIG. 9C.

In an embodiment, as the acoustic member 1150 is applied, sound pressure of a second direction D2 may be reduced, and sound pressure of a first direction D1 may be increased. Accordingly, a difference between the sound pressure of the first direction D1 and the sound pressure of the second direction D2 may be reduced. For example, referring to FIG. 12, graphs 1210 and 1215 indicate a sound pressure level radiated in the first direction D1 through a first hole 410, and graphs 1220 and 1225 indicate a sound pressure level radiated in the second direction D2 through the plurality of second holes 420. According to an embodiment, the graphs 1210 and 1220 indicate a sound pressure level in case that the acoustic member 1150 is applied, and the graphs 1215 and 1225 indicate a sound pressure level in case that the acoustic member 1150 is not applied. As illustrated in FIG. 12, as the acoustic member 1150 according to an embodiment is applied, the sound pressure of the second direction D2 may decrease and the sound pressure of the first direction D1 may increase. Accordingly, a difference between the sound pressure of the first direction D1 and the sound pressure of the second direction D2 may be reduced.

An electronic device (e.g., an electronic devices 300 of FIG. 3) according to an embodiment may comprise a display (e.g., a display 310 of FIG. 3) forming a first part (e.g., a first part 402 of FIG. 4B) of a front section (e.g., a front section 401 of FIG. 4B) of the electronic device, a first hole (e.g., a first hole 410 of FIG. 4A) penetrating a second part (e.g., a second part 404 of FIG. 4B) of the front section in a first direction (e.g., a first direction D1 of FIG. 4A) that the display faces, the second part of the front section surrounding the display and extending from a side section (e.g., a side section 406 of FIG. 4B) of the electronic device, a second hole (e.g., a plurality of second holes 420 of FIG. 4B) penetrating the side section in a second direction (e.g., a second direction D2 of FIG. 4A) perpendicular to the first direction, a casing (e.g., a casing 344 of FIG. 5B) and a speaker (e.g., a speaker 342 of FIG. 5B) within the casing, a first conduit (e.g., a first conduit 510 of FIG. 5B) extending from the casing to the second hole such that a diaphragm of the speaker is connected to the second hole, and a second conduit (e.g., a second conduit 520 of FIG. 5B) extending from the first conduit to connect the diaphragm to the first hole. The second conduit may include a section inclined at an acute angle toward the first hole with respect to the second direction. Through this, a sound pressure level radiated in the first direction through the first hole may be improved. In addition, sound performance may be improved by adjusting a balance between sound radiated in the first direction and sound radiated in the second direction.

In an embodiment, the first conduit may include a first section (e.g., a first section 511 of FIG. 5B) extending from the casing, and a second section (e.g., a second section 512 of FIG. 5B) extending from the first section so that the first section is connected to the second hole. The second conduit may be connected to the second section of the first conduit. The second section of the first conduit may include a portion inclined at an acute angle toward the first hole with respect to the second direction.

In an embodiment, the second hole may be formed of a plurality of second holes (in other words, the second hole may be one of a plurality or second holes; the second hole may be at least one second hole). The plurality of second holes may be arranged along a third direction (e.g., a third direction D3 of FIG. 4A) perpendicular to the first and second directions. The second section of the first conduit may extend along the third direction so as to overlap the plurality of second holes when viewed in the second direction.

In an embodiment, the second section of the first conduit may include first portions (e.g., first portions 512a of FIG. 5A) spaced apart from each other based on the third direction, and second portions (e.g., second portions 512b of FIG. 5A)) between the first portions. Each of the first portions may be directly connected to each of (or to a respective one of) the plurality of second holes. The second portions may be closed by the side section based on the second direction.

In an embodiment, the second portions may be inclined at an acute angle toward the first hole with respect to the second direction.

In an embodiment, the second conduit may be connected above the first portions and the second portions of the first conduit by extending in the third direction.

In an embodiment, the second hole may be formed of a plurality of second holes. At least one hole (e.g., at least one hole 421 of FIG. 7D) of the plurality of second holes may overlap the first section of the first conduit based on the second direction. The second section of the first conduit may include a branching space (e.g., an acoustic branching space 700 of FIG. 7A) overlapping the first section based on the second direction and overlapping the second conduit based on the first direction. An area (e.g., an area S2 of FIG. 7E) of the branching space 700 cut by one plane perpendicular to the first direction may be greater than an area (e.g., an area S1 of FIG. 7D) of the at least one hole. Through this, the sound performance may be improved by adjusting the balance between the sound radiated in the first direction and the sound radiated in the second direction.

In an embodiment, the least one hole among the second holes (e.g., a first acoustic hole 921 of FIG. 9A, a second hole 922 of FIG. 9B, a third acoustic hole 923 of FIG. 9C, and at least one hole 1020 of FIG. 11) may extend from a first opening (e.g., a first opening 921a of FIG. 9A, a first opening 922a of FIG. 9B, a first opening 923a of FIG. 9C, or a first opening 1120a of FIG. 11) formed on an outer surface (e.g., an outer surface 320C of FIG. 11) of the side section to a second opening (e.g., a second opening 921b of FIG. 9A, a second opening 922b of FIG. 9B, a second opening 923b of FIG. 9C, or a second opening 1020b of FIG. 11) formed on an inner surface (e.g., an inner surface 374C of FIG. 11) of the side section. The electronic device may include an acoustic member (e.g., an acoustic member 1150 of FIG. 11) disposed on the inner surface of the side section to cover the second opening. The acoustic member may improve the sound pressure level radiated in the first direction by providing resistance to the sound radiated in the second direction.

In an embodiment, a cross-sectional area of the second opening may be smaller than a cross-sectional area of the first opening. Accordingly, sound pressure radiated in the first direction may be improved by reducing sound pressure radiated in the second direction.

In an embodiment, the at least one hole may include a first section (e.g., a first section 9211 of FIG. 9A or a first section 9221 of FIG. 9B) connected to the first opening and having a first cross-sectional area, and a second section (e.g., a second section 9212 of FIG. 9A or a third section 9223 of FIG. 9B) connecting the first section of the at least one hole to the second opening and having a second cross-sectional area. The second cross-sectional area may be smaller than the first cross-sectional area.

In an embodiment, the at least one hole may include an inner circumferential surface (e.g., an inner circumferential surface 923c of FIG. 9C) extending from a circumference of the first opening to a circumference of the second opening. The inner circumferential surface may extend from the first opening to the second opening without a step.

The electronic device according to an embodiment may comprise a frame (e.g., a frame 370 of FIG. 3) forming the side section and the second part of the front section. The first conduit and the second conduit may be formed by the frame.

In an embodiment, the frame may include a first surface (e.g., a first surface 372A of FIG. 5B) supporting the display and a second surface (e.g., a second surface 372B of FIG. 5B) opposite to the first surface. The second conduit may extend from a first opening (e.g., a first opening 521 of FIG. 5B) connected to the first conduit to a second opening (e.g., a second opening 522 of FIG. 5B) formed on the first surface of the frame. Based on the second direction, the first opening and the second opening of the second conduit may include a first center point and a second center point. An imaginary line connecting the first center point and the second center point may be inclined at an acute angle toward the first hole with respect to the second direction.

In an embodiment, based on the second direction, a cross-sectional area of the first opening of the second conduit may be greater than a cross-sectional area of the second opening of the second conduit.

In an embodiment, the casing may be accommodated in a recess (e.g., a recess 379 of FIG. 3) formed on the first surface of the frame to support the display together with the first surface of the frame.

In an embodiment, the frame may include a part (e.g., a portion 3721 of FIG. 5B) supporting the display and partially forming the second conduit. The part of the frame may be located between the second conduit and the recess. Through this, even if the part is not reduced, the sound pressure radiated in the first direction may be improved, and the display may be stably supported by the part.

In an embodiment, a conduit (e.g., a conduit 346 of FIG. 5B) transmitting sound output from the speaker to the first conduit may be formed in the casing. The electronic device may comprise a sealing member (e.g., a sealing member 360 of FIG. 5B) disposed between the conduit of the casing and the first conduit.

In an embodiment, the sealing member may be inclined at an acute angle toward the display with respect to the second direction.

In an embodiment, an outlet of the conduit 346 connected to the sealing member may be formed on one surface of the casing. The one surface of the casing may support the sealing member and may be inclined in the same direction as the inclined section of the second conduit.

The electronic device according to an embodiment may comprise a frame. The sealing member may be disposed between the one surface of the casing and one surface of the frame. The one surface of the frame may support the sealing member. An inlet of the first conduit connected to the sealing member may be formed on the one surface of the frame. The one surface of the frame may be inclined in the same direction as the inclined section of the second conduit.

The electronic device according to an embodiment may comprise a first housing (e.g., a first housing 210 of FIG. 2A) including the display, a second housing (e.g., a second housing 220 of FIG. 2A), and a hinge structure (e.g., a hinge structure 250 of FIG. 2B) rotatably connecting the first housing to the second housing. The front section may be a front section of the second housing. The side section may be a side section of the second housing. The first hole and the second hole may be formed in the second housing. The casing may be disposed in the second housing.

The electronic device according to an embodiment may comprise another display (e.g., another display 380 of FIG. 5B) disposed on a rear surface of the first housing and on a rear surface of the second housing across the hinge structure.

**In** an embodiment, the other display may include a flexible display.

**In** an embodiment, the display may include a display panel (e.g., a display panel 311 of FIG. 5B) and a cover (e.g., a cover 312 of FIG. 5B) on the display panel. The first hole may be partially formed by the cover.

**In** an embodiment, the first hole and the second hole may be located on one side of the display when viewed in the first direction.

The electronic device according to an embodiment may not include an earpiece speaker independent of the speaker. Accordingly, a mounting space may be saved.

An electronic device according to an embodiment may comprise: a first section (or first surface) facing in a first direction; a display forming at least part of first section; a first hole penetrating (or in, or formed in) the first section; a second section (or side or edge section or side or edge surface) facing in a second direction, the second direction being perpendicular to the first direction; a second hole penetrating (or in, or formed in) the second section; a speaker; a first conduit arranged to convey sound generated by the speaker to the second hole; and a second conduit arranged to convey sound generated by the speaker to the first hole, wherein the second conduit includes a section inclined at an acute angle toward the first hole with respect to the second direction, or wherein the second conduit branches from the first conduit at an acute angle with respect to the second direction, or wherein a junction between the second conduit and first conduit is at an acute angle, or wherein the second conduit comprises at least a section branching off from, or meeting or joining, the first conduit at an acute angle with respect to the second direction, for example such that a sidewall of the branching off section meets a sidewall of the first conduit at an obtuse angle. Such embodiments may comprise any feature or any combination of features from any other described embodiment, with corresponding advantage. For example, in such embodiments, the second conduit may be tapered. Additionally, or alternatively, such embodiments may comprise an acoustic member (e.g. 1150 from FIG. 11) arranged to partially impede sound flow out of the second hole or second holes, for example to increase sound output from the first hole (or holes).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display forming a first part of a front section of the electronic device;
a first hole penetrating a second part of the front section in a first direction that the display faces, the second part of the front section surrounding the display and extending from a side section of the electronic device;
a second hole penetrating the side section in a second direction perpendicular to the first direction;
a casing and a speaker within the casing;
a first conduit extending from the casing to the second hole such that a diaphragm of the speaker is connected to the second hole; and
a second conduit extending from the first conduit to connect the diaphragm to the first hole, and
wherein the second conduit includes a section inclined at an acute angle toward the first hole with respect to the second direction.

2. The electronic device of claim **1,** wherein:
the first conduit includes:
a first section extending from the casing; and
a second section extending from the first section so that the first section is connected to the second hole;
the second conduit is connected to the second section of the first conduit; and
the second section of the first conduit includes a portion inclined at an acute angle toward the first hole with respect to the second direction.

3. The electronic device of claim 2, wherein:
the second hole is formed of a plurality of second holes;
the plurality of second holes are arranged along a third direction perpendicular to the first and second directions; and
the second section of the first conduit extends along the third direction so as to overlap the plurality of second holes when viewed in the second direction.

4. The electronic device of claim 3, wherein:
the second section of the first conduit includes:
first portions spaced apart from each other based on the third direction; and
second portions between the first portions;
each of the first portions is directly connected to each of the plurality of second holes; and
the second portions are closed by the side section based on the second direction.

5. The electronic device of claim 4, wherein the second portions are inclined at an acute angle toward the first hole with respect to the second direction.

6. The electronic device of claim 4 or claim 5, wherein the second conduit is connected above the first portions and the second portions of the first conduit by extending in the third direction.

7. The electronic device of claims 2 to 6, wherein:
the second hole is formed of a plurality of second holes;
at least one hole of the plurality of second holes overlaps the first section of the first conduit based on the second direction;
the second section of the first conduit includes a branching space overlapping the first section based on the second direction and overlapping the second conduit based on the first direction; and
an area of the branching space cut by one plane perpendicular to the first direction is greater than an area of the at least one hole.

8. The electronic device of any one of claims 1 to 6, wherein:
the hole extends from a first opening formed on an outer surface of the side section to a second opening formed on an inner surface of the side section; and
the electronic device includes an acoustic member disposed on the inner surface of the side section to cover the second opening.

9. The electronic device of claim 8, wherein a cross-sectional area of the second opening is smaller than a cross-sectional area of the first opening.

10. The electronic device of claim 9, wherein the at least one hole includes:
a first section connected to the first opening and having a first cross-sectional area; and
a second section connecting the first section of the at least one hole to the second opening and having a second cross-sectional area; and
the second cross-sectional area is smaller than the first cross-sectional area.

11. The electronic device of any one of claims 8 to 10, the at least one hole includes an inner circumferential surface extending from a circumference of the first opening to a circumference of the second opening, and
wherein the inner circumferential surface extends from the first opening to the second opening without a step.

12. The electronic device of any one of the preceding claims, comprising:
a frame forming the side section and the second part of the front section, and wherein the first conduit and the second conduit are formed by the frame.

13. The electronic device of claim 12, wherein:
the frame includes a first surface supporting the display and a second surface opposite to the first surface;
the second conduit extends from a first opening connected to the first conduit to a second opening formed on the first surface of the frame;
based on the second direction, the first opening and the second opening of the second conduit include a first center point and a second center point; and
an imaginary line connecting the first center point and the second center point is inclined at an acute angle toward the first hole with respect to the second direction.

14. The electronic device of claim 13,
based on the second direction, a cross-sectional area of the first opening of the second conduit is greater than a cross-sectional area of the second opening of the second conduit.

15. The electronic device of claim 14, wherein the casing is accommodated in a recess formed on the first surface of the frame to support the display together with the first surface of the frame.
